# EUROPÄISCHE PATENTSCHRIFT

(11) **EP 0 942 344 B1**
(45) Veröffentlichungstag und Bekanntmachung des Hinweises auf die Patenterteilung: **24.09.2003**
(21) Anmeldenummer: 99100866.5
(22) Anmeldetag: 19.01.1999
(51) Int. Cl.: G05B 19/4093

(54) **Verfahren zum Betreiben einer Schneidmaschine zum Schneiden von gestapeltem, blättrigem Gut**
Process for the operation of a cutting machine for cutting stacked sheet material
Méthode de fonctionnement d'une machine pour découper des matériaux plats empilés

(30) Priorität: 12.03.1998 DE 19810744
(43) Veröffentlichungstag der Anmeldung: 15.09.1999
(73) Patentinhaber: Adolf Mohr Maschinenfabrik GmbH & Co. KG, 65719 Hofheim am Taunus (DE)
(72) Erfinder: Gottschalk, Gerd, 65779 Kelkheim-Fischbach (DE); Schneider, Horst, 65719 Hofheim/Ts. (DE)
(74) Vertreter: Quermann, Helmut, Dipl.-Ing.

(56) Entgegenhaltungen:
- EP-A- 0 592 682
- DE-A- 2 752 418
- US-A- 5 272 622

## Beschreibung

Die Erfindung betrifft ein Verfahren zum Betreiben einer Schneidmaschine zum Schneiden von gestapeltem, blättrigem Gut, wobei der Schneidmaschine zur Grundeinstellung Parametereinstellungen zugeordnet werden. Diese sind nachfolgend als Maschinenparameter bezeichnet.

Eine Schneidmaschine zum Schneiden von gestapeltem, blättrigem Gut, insbesondere von Papier, Pappe oder dergleichen ist aus der EP 0.056.874 A2 bekannt.

Bei derartigen Schneidmaschinen sorgt eine gute Grundeinstellung der Maschinenparameter dafür, daß auch relativ ungeübtes Personal die Schneidmaschine gut bedienen kann, ohne die Grundeinstellung verändern zu müssen. Die Grundeinstellung bezieht sich beispielsweise auf die Geschwindigkeit des Vorschubsattels zum Verfahren des zu schneidenden Gutes, Beschleunigungs- und Bremsrampen im Zusammenhang mit der Verfahrbewegung des Vorschubsattels, den Preßdruck des Preßbalkens zum Pressen des zu schneidenden Gutes benachbart der Schneidebene usw.

Eine derartige Grundeinstellung der Maschinenparameter führt im Einzelfall zu keinen zufriedenstellenden Schneidergebnissen. Um diese zu erzielen, muß beispielsweise ein breiter Schneidgutstapel mit einer höheren Preßkraft beaufschlagt werden als ein schmaler Stapel. Auch kann der Vorschubsattel bei einem großen Stapel schneller abgebremst werden als bei einem kleinen Stapel. - Um den Betrieb der Schneidmaschine zu optimieren, ist bereits vorgeschlagen worden, die Maschinenparameter entsprechend dem konkreten Einzelfall verändern zu können, allerdings mit der Folge, daß alle zukünftigen Bearbeitungsschritte den geänderten Maschinenparametern unterliegen. Dies führt zu nicht befriedigenden Ergebnissen, da der die Schneidmaschine Bedienende dauernd die Maschinenparameter ändern muß, um im Einzelfall zufriedenstellende Schneidergebnisse sicherzustellen.

In dem DE-U-86 04 773 ist eine rechnergesteuerte Schneidmaschine zum Schneiden von Papier beschrieben. Bei dieser ist es möglich, Daten und Befehle, die im Zusammenhang mit der Bearbeitung von Papier durch die Schneidmaschine stehen, extern mittels eines Speichermediums zu speichern. Hierfür findet ein Magnetband in Form einer üblichen Kassette Verwendung, die den externen Speicher bildet. Auf der Kassette lassen sich Daten und Befehle in Form von Programmdaten speichern, und von der Schneidmaschine selbst können auch Daten auf den Speicher zurückgebracht werden. Hierdurch ist eine Korrektur des Programmes für die Bearbeitung möglich, und außerdem lassen sich diese Daten mit Vorteil auch für die Erstellung der Abrechnung verwenden, wenn der externe Speicher nach dem Ende der Bearbeitungsvorgänge entsprechend ausgewertet wird.

Aus der DE-A-27 52 418 ist eine Papierschneidmaschine mit Datenspeicher bekannt. Der Speicher nimmt als Teil eines die Maschine steuernden Mikrocomputers ein fest eingespeichertes Maschinenprogramm in einem Programmspeicher und das einzugebende Schneidprogramm in einem Datenspeicher auf. Über eine Tastatur können die im Datenspeicher befindlichen Soll-Werte und Zusatzfunktionen angewählt werden, um wahlweise diese einzeln zu löschen, durch andere zu ersetzen oder zwischen diesen weitere Daten einzuspeichern.

Es ist Aufgabe der vorliegenden Erfindung, ein Verfahren der eingangs genannten Art so weiterzubilden, daß es möglich ist, die Arbeitsweise der Schneidmaschine den sich während des Betriebes der Schneidmaschine ändernden Bedingungen anzupassen.

Das Verfahren der eingangs genannten Art wird erfindungsgemäß dahingehend weitergebildet, daß einem bestimmten Schneidprogramm einzelne Programmparameter als Parametereinstellung fest zugeordnet werden, sowie innerhalb eines Schneidprogrammes einem Schneidsatz einzelne satzparameter als Parametereinstellungen fest zugeordnet werden, derart, daß die Maschinenparameter gespeichert und gültig bleiben, bis sie geändert oder durch aktivierte Programm- oder Satzparameter ersetzt werden, die Programmparameter gespeichert und gültig bleiben, bis sie geändert oder durch aktivierte Satzparameter ersetzt werden, sowie die Satzparameter gespeichert und gültig bleiben, bis sie geändert werden.

Mit Hilfe der Maschinenparameter wird damit bei der Schneidmaschine die Grundeinstellung vorgenommen. Diese gute Grundeinstellung sorgt, wie vorstehend beschrieben, dafür, daß auch relativ ungeübtes Personal die Schneidmaschine gut bedienen kann, ohne eine einzige Einstellung vornehmen zu müssen. Mit Hilfe der Programmparameter können die einzelnen Parametereinstellungen einem Schneidprogramm fest zugeordnet werden. Ein Schneidprogramm, dem Programmparameter zugeordnet wurden, sorgt bei der Aktivierung dafür, daß die Schneidmaschine automatisch optimal für den jeweiligen Auftrag eingestellt wird. Diese Funktion ist besonders bei Wiederholaufträgen sehr hilfreich. Die Parametereinstellungen werden zu dem jeweiligen Schneidprogramm gespeichert und bleiben gültig, bis sie wieder geändert oder durch aktivierte Satzparameter ersetzt werden.

Während ein Schneidprogramm "abgearbeitet" wird, verändert sich das Schneidgut. Es kann sein, daß eine einmal gewählte Parametereinstellung ab einem gewissen Punkt des Schneidprogramms nicht mehr optimal ist und eine andere Einstellung das Arbeiten wesentlich erleichtern könnte. Mit Hilfe der Satzparameter können die einzelnen Parametereinstellungen einem Schneidsatz fest zugeordnet werden. Dadurch wird es möglich, die Schneidmaschine, wenn es gewünscht wird, von Schneidsatz zu Schneidsatz komplett neu zu konfigurieren. Wurden die Satzparameter erst einmal programmiert, so paßt sich die Einstellung der Schaeidmaschine automatisch dem sich während des Arbeitsprozesses verändernden Schneidgut an. Die Parametereinstellungen werden zu dem jeweiligen Schneidsatz gespeichert und bleiben gültig, bis sie wieder geändert werden.

Im Unterschied zum Stand der Technik, bei dem alle zukünftigen Bearbeitungsschritte der vorgenommenen Änderung der Parametereinstellung unterliegen, sieht die Erfindung vor, daß die Änderung der einzelnen Parametereinstellungen nur für das jeweilige Programm oder den jeweiligen Schneidsatz gilt.

Hat der Bediener beispielsweise einen Wiederholauftrag abzuarbeiten, mit einer demzufolge identischen Schneidfolge, bei der das zu schneidende Gut längs und quer geschnitten wird mit unterschiedlich breiten Stapeln, kann er die gemäß der Grundeinstellung vorgegebene Parametereinstellung, sowie die Maschinenparameter, ändern. Diese geänderten Parameter gelten dann für alle Schneidsätze des den Wiederholaufträgen zugeordneten Programmes. Die geänderten Parameter, die sich beispielsweise auf die Beschleunigung des Vorschubsattels, dessen Abbremsen oder dessen Geschwindigkeit, ferner auf die Preßzeit des Preßbalkens, dessen Preßkräfte oder die durch den Preßbalken bewirkte Vorpressung, ferner auf die Schnittgeschwindigkeit des Schneidmessers beziehen und gelten dann für alle Schneidsätze des Programms. Hierbei versteht man unter Schneidsatz das jeweilige Maß, das zum Schnitt anzufahren ist. Das Programm beinhaltet eine Vielzahl von Schneidsätzen. Aufgrund der Wahl der Programmparameter läßt sich gegenüber der Grundeinstellung, somit den Maschinenparametern, ein günstigeres Schneidergebnis erzielen, das allerdings noch verbessert werden kann. Will der Bediener im Programm mit anderen Parametern fahren, kann er die Satzparameterliste ändern. Dies bedeutet, daß er jeden Schneidsatz im Programm entsprechend seinen Vorstellungen ändern kann, beispielsweise, daß nach einem Schneidsatz der jeweilige Parameter, beispielsweise die Preßkraft, wieder geändert ist. So läßt sich ein individuelles Fahr- und Schneidprofil erzielen, bei dem die Schneidparameter und Zusatzparameter individuell einstellbar sind.

Die Parametereinstellungen der Maschinenparameterliste, Programmparameterliste und Satzparameterliste werden zwar vornehmlich die Beschleunigung des Vorschubsattels und/oder das Abbremsen des Vorschubsattels und/oder die Geschwindigkeit des Vorschubsattels, ferner die Preßzeit des Preßbalkens und/oder die Preßkräfte des Preßbalkens und/oder die Vorpressung durch den Preßbalken, ferner die Schnittgeschwindigkeit des Schneidmessers betreffen, sind hierauf aber nicht beschränkt. Die Parametereinstellungen können gleichfalls weitere Parameter im Zusammenhang mit dem Betreiben der Schneidmaschine betreffen, beispielsweise das Ein- und Ausschalten einer Blasluftzufuhr zum Abführen von bei einem Zwischenschnitt anfallenden Schneidgutabfall durch einen zwischen einem Vorder- und Hintertisch der Schneidmaschine gebildeten Spalt, wie er für die Schneidmaschine nach der EP 0.056.874 A2 beschrieben ist. Die Parametereinstellung kann auch Parameter betreffen, die im Zusammenhang mit der Optimierung des Hubbewegung des Preßbalkens und/oder des Schneidmessers zusammenhängen.

Maschinen-, Programm- und Satzparameter können direkt an der Schneidmaschine manuell eingegeben werden. Sie können aber auch, bei einer automatischen Schneidprogrammgenerierung, automatisch erstellt werden. In diesem Fall braucht der Bediener keinerlei Einstellungen mehr vorzunehmen. Die Schneidmaschine ist immer optimal für den jeweiligen Anwendungsfall eingestellt.

Die nachfolgende Liste gibt einen Überblick über die beispielsweise einstellbaren Parameter der Schneidmaschine.

### I. Liste der Maschinenparameter

- Preßzeit vor dem Schnitt
- Preßzeit ohne Schnitt
- Preßkraft-Stufe
- Preßkraft-Sensoren
- Preßkraft-Tabelle
- Sattelvorlaufbeschleunigung
- Sattelvorlauf Abbremsen
- Sattelgeschwindigkeit
- Sattel sanft Abbremsen
- Blasluft Ein/Aus
- Blasluft Start/Ende
- Preßbalken Optimierung
- Preßbalken Lichtschranke Ein/Aus
- sanfte Vorpressung
- Schnellschnitt
- Parameterliste-Kopie

### II. Liste der Programmparameter

- Preßzeit vor dem Schnitt
- Preßzeit ohne Schnitt
- Preßkraft-Stufe
- Preßkraft-Sensoren
- Preßkraft-Tabelle
- Sattelvorlaufbeschleunigung
- Sattelvorlauf Abbremsen
- Sattelgeschwindigkeit
- Sattel sanft Abbremsen
- Blasluft Ein/Aus
- Blasluft Start/Ende
- Preßbalken Optimierung
- Preßbalken Lichtschranke Ein/Aus
- sanfte Vorpressung
- Schnellschnitt
- Parameterliste-Kopie

### III. Liste Satzparameter

- Preßzeit vor dem Schnitt
- Preßzeit ohne Schnitt
- Preßkraft-Stufe
- Preßkraft-Sensoren
- Preßkraft-Tabelle
- Sattelvorlaufbeschleunigung
- Sattelvorlauf Abbremsen
- Sattelgeschwindigkeit
- Sattel sanft Abbremsen
- Blasluft Ein/Aus
- Blasluft Start/Ende
- Preßbalken Optimierung
- Preßbalken Lichtschranke ein/aus
- sanfte Vorpressung
- Schnellschnitt
- Parameterliste-Kopie

**Preßzeit vor dem Schnitt** betrifft die Zeitdauer, die der Preßbalken vor dem anschließenden Schnitt auf das zu schneidende Gut einwirkt. Unter **Preßzeit ohne Schnitt** wird die Zeitspanne verstanden, die der Preßbalken auf das Gut einwirkt, ohne daß anschließend ein Schnitt erfolgt. Eine derartige Pressung wird vorgenommen, wenn sich zwischen den einzelnen Blättern des Schneidgutstapels Luft befindet und diese aus dem Stapel gepreßt werden soll. **Preßkraft-Stufe** bezieht sich auf eine in verschiedenen Stärkestufen einstellbare Preßkraft. Bei **Preßkraft-** **Sensoren** ermitteln Sensoren in der Tischoberfläche die Breite des Schneidgutstapels und es wird bei Wahl dieses Parameters automatisch die Preßkraft eingestellt. **Preßkraft-Tabelle** betrifft die Einstellung des Parameters aufgrund Vorgabe einer Tabelle. **Sattelvorlauf-Beschleunigung** betrifft die Beschleunigung des Sattels bei dessen Bewegung in Richtung der Schneidebene. **Sattelvorlauf abbremsen** betrifft die Auswahl unter bestimmten Abbremskurven des Vorschubsattels. Unter **Sattelge**schwindigkeit sind verschiedene Geschwindigkeiten beim Vor- und Rücklauf des Sattels wählbar. Ist der Parameter Sattel sanft **abbremsen** gewählt, erfolgt ein sanftes Abbremsen des Vorschubsattels, was insbesondere dann angezeigt ist, wenn es sich bei dem zu schneidenden Gut um Papier mit besonders glatter Oberfläche handelt. Bei Aktivierung des Parameters **Blasluft Ein/Aus** bzw. **Blasluft Start/Ende** wird die Blasluft beim Entsorgen des Schneidgutabfalles dosiert eingeschaltet *oder* ausgeschaltet bzw. der Beginn und das Ende des Zeitpunktes der Blasluftzufuhr vorgegeben. Bei Wahl des Parameters **Preßbalken Optimierung** wird zur Prozeßbeschleunigung der Preßbalken nach dem Schnitt nicht vollständig angehoben, sondern nur um ein geringfügiges Maß, so daß das zu schneidende Gut frei unter dem Preßbalken verschoben werden kann. In der Einschaltstellung des Parameters **Preßbalken Lichtschranke Ein/Aus** ist eine Lichtschranke aktiviert, die gleichzeitig bewirkt, daß der Preßbalken nicht vollständig angehoben wird. Bei **sanfte Vorpressung** wird der Preßbalken sanft auf das zu schneidende Gut aufgelegt. Dieser Parameter wird insbesondere bei feinem Material gewählt, insbesondere bei hochveredelten Oberflächen des Schneidgutes, um zu verhindern, daß die Einzelblattlagen sich beim Absenken des Preßbalkens nicht gegeneinander verschieben. Bei **Schnellschnitt** erfaßt ein Sensor am Preßbalken die Position des Schneidmessers zum Preßbalken, wobei dann, wenn die Schneidkante des Schneidmessers geringfügig oberhalb der Unterseite des Preßbalkens positioniert ist, bereits der Preßbalken gelöst wird, mit der Folge, daß der nächste Schnitt in der dann bereits möglichen Vorschubbewegung des zu schneidenden Gutes innerhalb einer kürzeren Zeitspanne eingeleitet werden kann. **Parameterliste/Kopie** ermöglicht es, eine einmal erzeugte Parameterliste zu kopieren, beispielsweise für weitere Programme oder Sätze.

## Patentansprüche

1. Verfahren zum Betreiben einer Schneidmaschine zum Schneiden von gestapeltem, blättrigem Gut, wobei der Schneidmaschine zur Grundeinstellung Maschinenparameter als Parametereinstellungen zugeordnet werden, **dadurch gekennzeichnet, daß** einem bestimmten Schneidprogramm einzelne Programmparameter als Parametereinstellungen fest zugeordnet werden, sowie innerhalb eines Schneidprogrammes einem Schneidsatz einzelne satzparameter als Parametereinstellungen fest zugeordnet werden, derart, daß die Maschinenparameter gespeichert und gültig bleiben, bis sie geändert oder durch aktivierte Programmoder Satzparameter ersetzt werden, die Programmparameter gespeichert und gültig bleiben, bis sie geändert oder durch aktivierte Satzparameter ersetzt werden, sowie die Satzparameter gespeichert und gültig bleiben, bis sie geändert werden.

2. Verfahren nach Anspruch 1, wobei das zu schneidende Gut vor dem Schnitt in die Schneidposition verschoben und anschließend benachbart der Schneidebene gepreßt wird, sowie bei gepreßtem Gut der Schnitt erfolgt, **dadurch gekennzeichnet, daß** die Parametereinstellungen vorschub- und/oder preß- und/oder schneidspezifische Größen betreffen.

3. Verfahren nach Anspruch 2, **dadurch gekennzeichnet, daß** die Parametereinstellungen die Beschleunigung eines Vorschubsattels zum Verschieben des zu schneidenden Gutes und/oder das Abbremsen des Vorschubsattels und/oder die Geschwindigkeit des Vorschubsattels betreffen.

4. Verfahren nach Anspruch 2 oder 3, **dadurch gekennzeichnet, daß** die Parametereinstellungen die Preßzeit eines Preßbalkens zum Pressen des zu schneidenden Gutes und/oder die Preßkraft des Preßbalkens und/oder eine Vorpressung durch den Preßbalken und/oder die Hubbewegung des Preßbalkens betreffen.

5. Verfahren nach einem der Ansprüche 2 bis 4, **dadurch gekennzeichnet, daß** die Parametereinstellungen die Schnittgeschwindigkeit eines Schneidmessers zum Schneiden des Gutes und/oder die Hubbewegung des Schneidmessers betreffen.

6. Verfahren nach einem der Ansprüche 2 bis 5, **dadurch gekennzeichnet, daß** die Parametereinstellungen weitere Parameter im Zusammenhang mit dem Betreiben der Schneidmaschine betreffen, insbesondere das Aktivieren einer Blasluftzufuhr.

7. Verfahren nach einem der Ansprüche 1 bis 6, **dadurch gekennzeichnet, daß** die Maschinen- und/oder Programmund/oder Satzparameter direkt an der Schneidmaschine eingebbar sind.

8. Verfahren nach einem der Ansprüche 1 bis 6, **dadurch gekennzeichnet, daß** die Maschinen- und/oder Programmund/oder Satzparameter extern erzeugt werden.

## Claims

1. Process for the operation of a cutting machine for cutting stacked sheet product, wherein machine parameters are assigned to the cutting machine as parameter settings for the initial setting, **characterised in that** individual program parameters are permanently assigned to a certain cutting program as parameter settings, **in that** individual batch parameters are permanently assigned to a set of cutters as parameter settings within a cutting program so that the machine parameters remain stored and valid until they are modified or replaced by activated program or batch settings, and **in that** the batch parameters remain stored and valid until they are modified.

2. Process according to Claim 1, wherein the product to be cut is moved before cutting into the cutting position, then pressed adjacent to the cutting plane and wherein the cutting is carried out when the product is pressed, **characterised in that** the parameter settings relate to feed- and/or pressing- and/or cutting-specific values.

3. Process according to Claim 2, **characterised in that** the parameter settings relate to the acceleration of a feed saddle for displacing the product to be cutting and/or to the braking of the feed saddle and/or the speed of the feed saddle.

4. Process according to Claim 2 or 3, **characterised in that** the parameter settings relate to the pressing time of a pressing beam for pressing the product to be cut and/or to the pressing force of the pressing bean and/or to pre-pressing by the pressing beam and/or the lifting movement of the pressing beam.

5. Process according to one of Claims 2 to 4, **characterised in that** the parameter settings relate to the cutting speed of a knife for cutting the product and/or the lifting movement of the knife.

6. Process according to one of Claims 2 to 5, **characterised in that** the parameter settings relate to further parameters associated with the operation of the cutting machine, particularly the activation of a blowing air supply.

7. Process according to one of Claims 1 to 6, **characterised in that** the machine and/or program and/or batch parameters can be fed in directly on the cutting machine.

8. Process according to one of Claims 1 to 6, **characterised in that** the machine and/or program and/or batch parameters are generated externally.

## Revendications

1. Procédé d'entraînement d'une découpeuse permettant de couper des marchandises empilées et lamellaires, au cours duquel, pour le réglage de base, des paramètres de machine sont affectée à la découpeuse comme réglages paramétrés,
**caractérisé en ce que**
des paramètres de programme distincts sont affectée définitivement à un programme de coupe précis comme réglages paramétrés, et à l'intérieur d'un programme de coupe, des paramètres d'assortiment distincts sont affectés définitivement à un assortiment de coupe comme réglages paramétrés, de telle sorte que les paramètres machine sont stockés et restent valables jusqu'à ce qu'ils soient modifiés ou remplacés par des paramètres de programme ou d'assortiment activés, les paramètres de programme sont stockés et restent valables jusqu'à ce qu'ils soient modifiés ou remplacés par des paramètres d'assortiment activés, et les paramètres d'assortiment sont stockés et restent valables jusqu'à ce qu'ils soient modifiés.

2. Procédé selon la revendication 1, selon lequel les marchandises à couper sont placées, avant la coupe, dans la position de coupe et sont ensuite comprimées dans une position contiguë au plan de coupe et la coupe s'effectue même lorsque les marchandises sont comprimées,
**caractérisé en ce que**
les réglages paramétrés concernent des valeurs spécifiques au déplacement en avant et/ou à la compression et/ou à la coupe.

3. Procédé selon la revendication 2,
**caractérisé en ce que**
les réglages paramétrés concernent l'accélération d'un étrier de déplacement en avant pour déplacer les marchandises à couper et/ou le freinage de l'étrier de déplacement en avant et/ou la vitesse de l'étrier de déplacement en avant.

4. Procédé selon la revendication 2 ou 3,
**caractérisé en ce que**
les réglages paramétrés concernent la durée de compression d'une poutre de compression permettant de comprimer les marchandises à couper et/ou la force de compression de la poutre de compression et/ou une compression préalable à l'aide de la poutre de compression et/ou le soulèvement de la poutre de compression.

5. Procédé selon l'une quelconque des revendications 2 à 4,
**caractérisé en ce que**
les réglages paramétrés concernant la vitesse de coupe d'un couteau coupant pour couper les marchandises et/ou le soulèvement du couteau coupant.

6. Procédé selon l'une quelconque des revendications 2 à 5,
**caractérisé en ce que**
les réglages paramétrés concernent d'autres paramètres relatifs à l'entraînement de la machine de coupe, en particulier l'activation d'une arrivée d'air de soufflage.

7. Procédé selon l'une quelconque des revendications 1 à 6,
**caractérisé en ce que**
les paramètres de machine et/ou de programme et/ou d'assortiment peuvent être directement fournis sur la machine de coupe.

8. Procédé selon l'une quelconque des revendications 1 à 6,
**caractérisé en ce que**
les paramètres de machine et/ou de programme et/ou d'assortiment sont produits en externe.
